**Europäisches Patentamt**

**European Patent Office**

**Office européen des brevets**

(19)

(11) Veröffentlichungsnummer: **0 006 135**
**B1**

(12)

# EUROPÄISCHE PATENTSCHRIFT

(45) Veröffentlichungstag der Patentschrift:
**16.09.81**

(21) Anmeldenummer: **79101486.3**

(22) Anmeldetag: **15.05.79**

(51) Int. Cl.³: **C 04 B 13/28,** C 04 B 17/05,
C 08 G 12/38

(54) Zusatzmittel für anorganische Bindemittel, Baumaterial und ein Verfahren zu dessen Herstellung.

(30) Priorität: **16.06.78 DE 2826447**

(43) Veröffentlichungstag der Anmeldung:
**09.01.80 Patentblatt 80/1**

(45) Bekanntmachung des Hinweises auf die Patenterteilung:
**16.09.81 Patentblatt 81/37**

(84) Benannte Vertragsstaaten:
**AT BE CH DE FR GB IT NL SE**

(56) Entgegenhaltungen:
**AT-B-263 607**
**DE-A-2 505 578**
**DE-A-2 638 466**
**DE-B-1 908 094**
**US-A-2 141 569**
**US-A-3 899 468**

(73) Patentinhaber: **CHEMIE LINZ AKTIENGESELLSCHAFT,**
**St. Peter-Strasse 25, A-4020 Linz (AT)**
(84) Benannte Vertragsstaaten: **BE CH FR GB IT NL SE AT**

(73) Patentinhaber: **Lentia Gesellschaft mit beschränkter**
**Haftung, Schwanthalerstrasse 39 Postfach 20 16 26,**
**D-8000 München 2 (DE)**
(84) Benannte Vertragsstaaten: **DE**

(72) Erfinder: **Pieh, Stefan, Dr., Carl Boschweg 1b, A-4020 Linz**
**(AT)**
Erfinder: **Czepel, Hubert, Dr., Marienberg 31,**
**A-4045 Dornach (AT)**

Zusatzmittel für anorganische Bindemittel, Baumaterial und ein Verfahren zu dessen Herstellung

Die Erfindung betrifft ein Zusatzmittel für anorganische Bindemittel, insbesondere Zement, auf Basis eines Melamin-Harnstoff-Mischharzes mit Formaldehyd, das die Fliessfähigkeit und Frühfestigkeit des daraus hergestellten Baustoffes verbessert, sowie den damit hergestellten Baustoff und ein Verfahren zu dessen Herstellung.

Aus der US-A-2.141.569 ist bekannt, dass die Fliessfähigkeit von Baustoffen auf Basis Zement durch Mittel, die auf den Zement dispergierend wirken, erhöht werden kann. Da durch die Erhöhung der Fliessfähigkeit ein niedrigerer Wasser-Zementwert eingehalten werden kann, können höhere Festigkeiten des mit diesem Zusatz hergestellten Baumaterials erzielt werden. Die gemäss dieser US-PS verwendeten Mittel weisen als essentiellen Bestandteil Sulfonsäuregruppen auf, die an ein Formaldehydharz gebunden sind, wobei diese Harze durch Kondensation von aromatischen Sulfonsäuren, insbesondere von Naphthalinsulfonsäuren mit Formaldehyd erhalten werden.

In Verfolgung des Prinzips gemäss US-A-2.141.569 wurden auch eine Reihe anderer Sulfonsäuren wie z.B. Lignosulfonsäuren (US-A-2.169.980), Polybenzylsulfonsäuren (US-A-2.445.569) und auch sulfit- oder sulfonsäuremodifizierte Harze auf Basis eines Amino-s-triazins mit mindestens zwei $NH_2$-Gruppen als Zementdispersionsmittel vorgeschlagen, die vor allem eine Verflüssigung, durch die damit verbundene Möglichkeit der Wassereinsparung, aber auch eine festigkeitserhöhende Wirkung besitzen.

Wird hingegen auf die Einsparung des Anmachwassers verzichtet, so wird das Baumaterial besser giess- oder pumpfähig, es zeigt sich aber eine geringere Frühfestigkeit vor allem in den ersten Stunden der Erhärtungsphase, die eine Folge einer Verzögerung des Erhärtungsvorganges ist.

Die gemäss AT-A-263 607 verwendeten, modifizierten Triazinharze sind in erster Linie Umsetzungsprodukte von Melaminformaldehydharzen mit Alkalisulfiten oder Alkalisalzen der dischwefeligen Säure, bei denen der Sulfitrest mit den Methylolgruppen des Harzes regiert. Die $SO_3H$-Gruppe dieser modifizierten Harze ist also in erster Linie über $-O-CH_2-$Brücken an das Triazin gebunden.

Daneben sind auch noch sulfonsäuremodifizierte Harze erwähnt, die sich von Diaminotriazinen, wie Acetoguanamin oder Benzoguanamin ableiten, bei denen die Sulfongruppe an die Methyl- oder Phenylgruppe, also direkt an das zur Harzbildung eingesetzte Triazin gebunden ist. Solche Sulfonsäuren sind sehr schwer zugänglich, und davon abgeleitete Harze haben in die Praxis keinen Eingang gefunden.

Gemäss AT-A-342 867 können bei der Herstellung von Aminotriazin-Formaldehydharzen, die durch Sulfonsäuregruppen modifiziert sind, indem sie während der Harzbildung mit Alkalisulfiten umgesetzt werden, alternativ bis zu 40 Mol.% des Melamins durch Harnstoff ersetzt sein, ohne die Wirkung als Zusatzmittel für Baustoffe zu stören.

Überraschenderweise konnte gefunden werden, dass auf Basis von speziell modifizierten Aminoplastharzen Zusatzmittel für Baumaterialien auf Basis anorganischer Bindemittel geschaffen werden können, die sehr gut verflüssigend wirken, ohne einen negativen Einfluss auf die Frühfestigkeitsentwicklung zu besitzen, wenn als Aminoplastharze Melamin-Harnstoff-Formaldehydmischharze eingesetzt werden, die mit bestimmten Mengen an aromatischen Aminosulfonsäuren, insbesondere Sulfanilsäure, modifiziert sind. Diese neuen Zusatzmittel zeichnen sich dadurch aus, dass sie sogar dann eine Erhöhung der Frühfestigkeit bringen, wenn zu Gunsten der Fliessfähigkeit des Baustoffes auf eine Einsparung von Anmachwasser verzichtet wird. Überraschend ist hierbei, dass der Harnstoffanteil im Harz wesentlich für die Erzielung der guten Frühfestigkeitswerte ist, während Harnstoff bisher bestenfalls die Rolle eines in dieser Hinsicht nicht wirksamen Ersatzstoffes für das Aminotriazin darstellte.

Gegenstand der vorliegenden Erfindung ist demnach ein Zusatzmittel für anorganische Bindemittel auf Basis eines zu einem wasserlöslichen Salz einer Sulfonsäure modifizierten Mischharzes aus Melamin, Harnstoff und Formaldehyd, gekennzeichnet durch die Modifizierung durch eine aromatische Aminosulfonsäure, wobei bei der Kondensation folgende Molverhältnisse vorliegen: Molverhältnis von aromatischer Aminosulfonsäure zu der Summe von Melamin und Harnstoff (0,2 bis 1,0) : 1,0, Molverhältnis von Melamin zu Harnstoff 0,75 : 0,25 bis 0,30 : 0,70, Molverhältnis von Summe von Melamin und Harnstoff zu Formaldehyd 1 : (1,5 bis 3,0).

Das Zusatzmittel kann ausserdem die üblichen Additive, wie Luftporenbildner, Plastifizierer und/oder Abbindebeschleuniger enthalten.

Besonders günstige Festigkeitseigenschaften werden erzielt, wenn im Harz der Harnstoffanteil gegenüber Melamin überwiegt, also das Verhältnis Harnstoff zu Melamin grösser 1 ist, wobei es gleichzeitig günstig ist, den Formaldehydanteil möglichst niedrig zu halten.

Als aromatische Aminosulfonsäure ist insbesondere die Sulfanilsäure zu nennen. Andere bevorzugte aromatische Aminosulfonsäuren, die sich beispielsweise sowohl vom Benzol als auch vom Naphtalin ableiten können, sind Metanilsäure, Naphthyl-1-amin-6-sulfonsäure (Cleve-Säure) und Naphtyl-1-amin-4-sulfonsäure. Auch Naphthyl-1-amin-5-sulfonsäure (Laurent'sche Säure), Naphthyl-1-amin-3,6-disulfonsäure und Naphthyl-1-amin-3,6,8-trisulfonsäure sind beispielsweise geeignet.

Als wasserlösliche Salze der modifizierten Aminoplastharze sind in erster Linie die Alkali-oder Erdalkalisalze, wie insbesondere das Na-, K- oder Ca-Salz, oder aber das Ammoniumsalz zu nennen.

Als Baustoffe, denen das erfindungsgemässe Zusatzmittel zur Verbesserung der Eigenschaften zugegeben werden kann, kommen in erster Linie Zementmörtel und Beton in Frage, wobei das Mittel sowohl für Fliessbeton (bei Beibehaltung der Menge an Anmachwasser) als auch hochfesten Beton geeignet ist, wobei im letzteren Fall durch das erfindungsgemässe Mittel Anmachwasser eingespart wird. Das erfindungsgemässe Mittel kann aber auch anderen anorganischen Baumaterialien, die auf Gips, Anhydrit, Kalk, Magnesitzement oder Tonerdezement als Bindemittel aufgebaut sind, mit Erfolg zugesetzt werden.

Der Zusatz des Mittels, das in der Regel als etwa 20%ige, wässrige Lösung vorliegt, erfolgt in einer Menge von 0,1 bis 10 Gew.% an Festharz in dieser Lösung, bezogen auf den Gehalt des Baustoffes an anorganischen Bindemittel.

Das in wässriger Lösung hergestellte Aminoplastharz kann jedoch auch nach einem der üblichen Trocknungsverfahren, z. B. Sprühtrocknungsverfahren, unter Beibehaltung seiner verflüssigenden Eigenschaften getrocknet werden und als pulverförmiges Harz den Baustoffen zugesetzt werden.

Die Zumischung des Mittels erfolgt üblicherweise unmittelbar vor der Verarbeitung direkt zur Mischung des Bindemittels mit Wasser und den üblichen Zuschlagstoffen. Es ist aber z. B. auch möglich, das Salz des modifizierten Aminoplastharzes zunächst mit dem Anmachwasser zu mischen und dann das Bindemittel und die Zuschlagstoffe, wie Sand, Kies usw. einzubringen.

Die Herstellung der erfindungsgemässen, modifizierten Aminoplastharze gelingt nach üblichen Methoden. So kann man z. B. das Melamin mit einem Teil des Formaldehyds und einem Salz, vorzugsweise einem Alkalisalz der Aminosulfonsäure im alkalischen Bereich vorkondensieren und anschliessend mit Harnstoff versetzen, der vorher bereits methyloliert wurde. Danach wird der pH-Wert durch Zugabe von Säuren auf Werte von etwa 4 bis 6,5 gesenkt und die Kondensation bis zur gewünschten Viskosität, die in der Regel im Bereich von 5 bis 50 mPas/20°C und 20 %iger Lösung liegt, durchgeführt. Die Beendigung der Kondensationsreaktion gelingt durch Erhöhung des pH-Wertes auf Werte zwischen 7,5 und 9. Es ist aber auch möglich, Melamin und Harnstoff gleichzeitig vorzukondensieren, die Sulfonsäure zuzusetzen und nach erfolgter Reaktion durch Erniedrigung des pH-Wertes die eigentliche Kondensation einzuleiten.

Die Kondensation wird bevorzugt bei erhöhter Temperatur durchgeführt, um die Reaktionszeiten abzukürzen. Man kann aber auch bei Zimmertemperatur kondensieren, vor allem dann, wenn bei niedrigeren pH-Werten gearbeitet wird.

Die folgenden Beispiele sollen die vorliegende Erfindung näher erläutern, ohne sie darauf beschränken zu wollen.

Beispiel 1 bis 12:

a g Melamin (M) werden mit b g eines 36,9%igen Formalins (F/M) im Reaktionsgefäss vermischt und mit 3 n Natronlauge auf pH 9,0 gestellt, erhitzt und nachdem das Melamin gelöst ist, werden c g des Salzes der Aminosulfonsäure S in d g Wasser ($H_2O/S$) zugesetzt. Diese Mischung wird 45 Minuten bei 75°C im alkalischen pH-Bereich (pH = 10,5) temperiert und dann mit e g Wasser ($H_2O/V$) verdünnt. Darauf wird eine Lösung von f g Harnstoff in g g 36,9% Formalin (F/U) hinzugefügt. Der gesamte Ansatz wird nun bis zum pH 5,5 bis 6,0 mit Schwefelsäure bzw. Ameisensäure angesäuert und bei 75°C bis zu einer Viskosität von 9 mPaS bei 20°C im Haake-Rotationsviskosimeter, Geschwindigkeitsgefälle D = 976 $s^1$ kondensiert. Nun wird der pH-Wert des gesamten Ansatzes mit Natronlauge 30%ig auf pH 8,5 gestellt. Nach Abkühlung auf 20°C wird eine wasserverdünnbare Harzlösung mit einer praktischen Feststoffkonzentration von 20 bis 22% erhalten.

Die so erhaltenen Harze sind in folgender Tabelle zusammengestellt, wobei in den Beispielen 1 bis 7 Sulfanilsäure, in Beispiel 8 Metanilsäure, in Beispiel 9 Naphthyl-1-amin-6-sulfonsäure, in Beispiel 10 Naphthyl-1-amin-4-sulfonsäure, in Beispiel 11 Naphthyl-1-amin-5-sulfonsäure und in Beispiel 12 Naphthyl-1-amin-3,6-disulfonsäure als aromatische Aminosulfonsäure eingesetzt wurden.

| Beispiel N | U : M : S : F Molverhältnis | a M | b F/M | c S | d $H_2O/S$ | e $H_2O/V$ | f U | g F/U |
|---|---|---|---|---|---|---|---|---|
| 1 | 0,5:0,5,4:2,25 | 63 | 121,95 | 99,6 | 293,2 | 399,5 | 30 | 60,97 |
| 2 | 0,25:0,75:0,4:2,25 | 94,5 | 156,8 | 99,6 | 359,5 | 388,5 | 15 | 26,13 |
| 3 | 0,4:0,6:0,4:2,4 | 75,6 | 146,34 | 99,6 | 320,8 | 401,4 | 24 | 48,78 |
| 4 | 0,6:0,4:0,4:2,1 | 50,4 | 97,56 | 99,6 | 265,6 | 397,47 | 36 | 73,17 |
| 5 | 0,7:0,3:0,4:2,25 | 37,8 | 84,55 | 99,6 | 239,2 | 409,35 | 42 | 98,37 |
| 6 | 0,5:0,5:0,4:1,5 | 63 | 81,3 | 99,6 | 289 | 366,9 | 30 | 40,65 |
| 7 | 0,5:0,5:0,55:3,0 | 63 | 162,6 | 136,95 | 355,6 | 475,5 | 30 | 81,3 |
| 8 | 0,5:0,5:0,33:2,25 | 126 | 243,9 | 170,4 | 558,3 | 813,8 | 60 | 122,0 |
| 9 | 0,5:0,5:0,4:2,25 | 126 | 243,9 | 210,6 | 693,1 | 104,9 | 60 | 122,0 |
| 10 | 0,5:0,5:0,4:2,25 | 126 | 243,9 | 210,6 | 693,1 | 104,9 | 60 | 122,0 |
| 11 | 0,5:0,5:0,4:2,25 | 63 | 121,9 | 105,3 | 346,8 | 522,2 | 30 | 61,0 |
| 12 | 0,5:0,5:0,2:2,25 | 63 | 121,9 | 91,8 | 275,0 | — | 30 | 61,0 |

Beispiel 13:

Aus Portlandzement PZ 275 wurden parallele Proben eines Zementmörtels hergestellt, wobei mit Ausnahme einer Kontrollprobe das gemäss Beispiel 1 hergestellte, erfindungsgemässe Zusatzmittel in einer Menge von 1 Gew.% Festharz, bezogen auf Zement, zugesetzt wurde. Die Proben wurden auf ein konstantes Ausbreitmass von 15,5 bis 16,0 cm eingestellt, es wurde also der wassereinsparende Effekt der Zusatzmittel ausgenützt. Aus diesen Proben wurden nach DIN 1164 Prüfkörper mit den Dimensionen 4 x 4 x 16 cm hergestellt, die ausgehärtet und geprüft wurden. Die Ergebnisse sind in der Tabelle zusammengestellt, wobei B die Biegezugfestigkeit und D die Druckfestigkeit in $N/cm^2$ sind.

| | Kontrolle | Zusatzmittel gemäss Beispiel 1 |
|---|---|---|
| W/Z | 0,53 | 0,46 |
| 24 Stunden | | |
| B | 220 | 350 |
| D | 1010 | 1320 |
| 2 Tage | | |
| B | 370 | 450 |
| D | 1980 | 2510 |
| 4 Tage | | |
| B | 550 | 560 |
| D | 3210 | 3540 |
| 7 Tage | | |
| B | 618 | 670 |
| D | 3690 | 4430 |

Beispiel 14:

Ebenfalls mit Portlandzement PZ 275 wurden Proben mit dem konstanten Wasserzementverhältnis von 0,5 hergestellt, wobei mit Ausnahme des Kontrollversuches die Zusatzmittel gemäss den Beispielen 1 bis 12 wie in Beispiel 13 zur Anwendung kamen. Die Prüfung erfolgte nach DIN 1164 unter Herstellung von Prüfkörpern des Ausmasses 4 x 4 x 16 cm. Die Ergebnisse sind in der Tabelle festgehalten, wobei B und D wieder die Biegezugfestigkeit und Druckfestigkeit in $N/cm^2$ sind.

| Beispiel | Ausbreitmass cm, DIN 1164 | 18 Stunden | | 24 Stunden | |
|---|---|---|---|---|---|
| | | B | D | B | D |
| Kontrolle | 12,3 | 278 | 1190 | 360 | 1640 |
| 1 | 22,8 | 314 | 1350 | 420 | 1810 |
| 2 | 25,2 | 353 | 1350 | 467 | 1850 |
| 3 | 25,6 | 329 | 1240 | 407 | 1810 |
| 4 | 24,0 | 335 | 1330 | 456 | 1770 |
| 5 | 23,0 | 310 | 1210 | 424 | 1700 |
| 6 | 25,2 | 320 | 1170 | 425 | 1590 |
| 7 | 23,8 | 316 | 1337 | 350 | 1660 |
| 8 | 23,0 | 310 | 1200 | 400 | 1820 |
| 9 | 22,4 | 350 | 1320 | 365 | 1620 |
| 10 | 22,2 | 354 | 1290 | 476 | 1824 |
| 11 | 20,6 | 375 | 1200 | 350 | 1580 |
| 12 | 18,0 | 369 | 1150 | 335 | 1470 |

Beispiel 15:

Aus 8,3 kg Portlandzement PZ 275, 4,98 kg Wasser, 10,88 kg Kies, Rundkorn 0 – 1 mm, 10,88 kg Kies, Rundkorn 1 – 4 mm, 8,16 kg Kies Rundkorn 4 – 8 mm, 13,6 kg Kies, Rundkorn 8 – 16 mm und 10,88 kg Kies, Rundkorn 16 – 32 mm, wurde in einem Zwangsmischer eine Betonmischung hergestellt. Das nach ÖNORM 3303 bestimmte Ausbreitmass des Nullbetons betrug 40 cm.

Wird dem Beton bei gleichem W/Z-Verhältnis die gemäss Beispiel 1 hergestellte, wässrige Harzlösung in einer Menge entsprechend 0,4% Festharz, bezogen auf Zement, zugesetzt, steigt das Ausbreitmass auf 53 cm an.

Die Druckfestigkeitsentwicklung des erfindungsgemäss hergestellten Fliessbetons zeigt im Vergleich zur Kontrolle folgende Werte in $N/cm^2$.

| | Harz nach Beispiel 1 | Kontrolle |
|---|---|---|
| 12 Stunden | 203 | 77 |
| 18 Stunden | 550 | 360 |
| 48 Stunden | 1820 | 1540 |
| 7 Tage | 2770 | 2470 |
| 28 Tage | 3720 | 3330 |

Beispiel 16:

Mit den gleichen Zusatzstoffen, wie in Beispiel 15 beschrieben, wurden 8,3 kg Portlandzement PZ 275 zu einem Beton verarbeitet (W/Z = 0,58), der ein Ausbreitmass nach ÖNORM 3303 von 40 cm zeigte. Setzt man bei der Bereitung der gleichen Betonmischung die Harzlösung gemäss Beispiel 1 in einer Menge entsprechend 0,6% Festharz, bezogen auf Zement, zu, so benötigt man zur Erzielung etwa des gleichen Ausbreitmasses von 40,5 cm ein W/Z-Verhältnis von nur 0,54.

Der so erhaltene Beton zeigte nach 2 Tagen eine Druckfestigkeit von 2700 $N/cm^2$, nach 4 Tagen von 3090 $N/cm^2$, nach 7 Tagen von 3410 $N/cm^2$ und nach 28 Tagen von 4330 $N/cm^2$ im Gegensatz zum Kontrollversuch, der nach 2 Tagen eine Druckfestigkeit von 1900 $N/cm^2$, nach 4 Tagen von 250 $N/cm^2$, nach 7 Tagen von 2750 $N/cm^2$ und nach 28 Tagen von 3930 $N/cm^2$ besass.

Beispiel 17:

1200 g Stukkaturgips und 504 g Wasser wurden im Zwangsmischer nach DIN 1164, Blatt 7, innig vermischt und das Ausbreitmass bestimmt, das 19 cm betrug.

Nun wurden Mischungen aus der gleichen Menge Gips unter Zusatz der wässrigen Harzlösung gemäss Beispiel 1 in einer Menge entsprechend einem Zusatz von 0,5% Festharz, bezogen auf Gips, bereitet, wobei die Wassermenge gegenüber der Kontrolle so verringert wurde, dass das Ausbreitmass auf 19 cm eingestellt wurde.

Aus allen 3 Proben wurden Probekörper des Ausmasses 4 x 4 x 16 cm hergestellt. Nach Entschalung wurden die so erhaltenen Gipsprismen 7 Tage im Normklima (65% Luftfeuchtigkeit, 22 °C) gelagert und anschliessend bei 40°C bis zur Gewichtskonstanz getrocknet.

Die nach DIN 1164 ermittelten Werte für die Biegezugfestigkeit und Druckfestigkeit in N/cm² sind in nachfolgender Tabelle angeführt.

| | Biegezugfestigkeit | Druckfestigkeit |
|---|---|---|
| Kontrolle | 540 | 2610 |
| Harz nach Beispiel 1 | 781 | 3260 |

**Beispiel 18:**

226,8 g MgCl₂.6H₂O, 600 g gebrannter Magnesit, 212,3 g Wasser, 200 g Holzspäne und 60,6 g der Harzlösung gemäss Beispiel 1, entsprechend 2% Festharz, wurde ein Magnesitzement hergestellt. Als Kontrolle wurden die gleichen Mengen MgCl₂.6H₂O Magnesit und Holspäne nur mit der Wassermenge 272,8 g, aber ohne Harzgehalt gemischt. Beide Mischungen wurden in Formen von 4 x 4 x 16 cm gefüllt, 1 Stunde bei 120°C getrocknet und 10 Tage bei 23°C gelagert. Die Prüfung der Biegezugfestigkeit und der Druckfestigkeit ergaben beim erfindungsgemässen Magnesitzement 815 N/cm₂ bzw. 1630 N/cm² bzw. 1630 N/cm² gegenüber 565 N/cm² und 1150 N/cm² bei der Kontrolle.

**Beispiel 19:**

Im Reaktionskolben werden 192,8 g Formalin 35%ig vorgelegt und unter Rühren 50,4 g Melamin und 36 g Harnstoff eingetragen. Nun wird die Heizung eingeschaltet und bei 25°C der pH-Wert der Mischung mit Natronlauge auf pH 9,0 gestellt. Innerhalb von 15 Minuten wird die Temperatur auf 80°C erhöht. Bei dieser Temperatur entsteht eine klare Lösung. Dann wird die wie folgt vorbereitete Sulfanilsäure-Na-Lösung zugesetzt:

271,2 g dest. H₂O und 16 g Ätznatron werden nach Lösen des Ätznatrons mit 69,2 g Sulfanilsäure versetzt und mit 50%iger NaOH, falls erforderlich, auf pH 10,5 gestellt.

Der pH-Wert der gesamten Mischung wird mittels Natronlauge auf 10,5 gestellt und bei 75°C die Mischung 45 Minuten reagieren gelassen. Anschliessend wird mit 401,7 g dest. H₂O verdünnt und die Reaktionsmischung auf 55°C gekühlt. Der pH-Wert wird mit 20%iger Ameisensäure auf 5,0 gestellt. Bei 55°C wird bis zu einer Viskosität bei 20°C im 2 mm DIN Auslaufbecher von 63 bis 67 sek. kondensiert. Nach Erreichen der gewünschten Viskosität wird der pH-Wert des gesamten Ansatzes mit NaOH 50%ig auf 8,5 gestellt und innerhalb von 30 Minuten auf Raumtemperatur gekühlt.

Eigenschaften des Harzes:
Viskosität 8–10 mPas
Feststoffgehalt etwa 20%

Eigenschaften eines Zementmörtels nach DIN 1164 aus Zement PZ 275 nach 18 Stunden
Wasser-Zementfaktor 0,5
1% Festharz/Zement
Harzzusammensetzung
U / M / S / F = 0,6 / 0,4 / 0,4 / 2,25

| | Ausbreit-mass in cm | N/mm² B | B/Bo | D | D/Do |
|---|---|---|---|---|---|
| O-Probe | 13,8 | 3,15 | | 13,5 | |
| Harz | 20 – 21 | 3,52 | 1,12 | 14,0 | 1,04 |

**Beispiel 20:**

In analoger Weise zu den Beispielen 1–2 und 19 hergestellte Harze der unten angegebenen Zusammensetzung wurden mit 2 Proben von Zement PZ 275 verschiedener Herkunft zu einem Zementmörtel nach DIN 1164 verarbeitet und geprüft. Der Wasserzementfaktor betrug 0,5, der Harzzusatz betrug 1% Festharz bezogen auf Zement. Die Prüfung wurde 18 Stunden nach der Mörtelbereitung durchgeführt. Die Harze wurden in der Zusammensetzung so gewählt, dass ein konstantes Verhältnis von Formaldehyd zu Harnstoff von 1,0 und von Formaldehyd zu Melamin von 2,5 eingehalten wurde. Sie wurden als etwa 20%ige, wässrige Lösung eingesetzt. Die Ergebnisse sind in der Tabelle zusammengefasst. A ist dabei das Ausbreitmass. Zur besseren Verdeutlichung des Effektes wird auch der Quotient der erzielten Druck- bzw. Biegezugfestigkeiten dividiert durch die Werte der Zementmörtelprobe ohne Harzzusatz in der Tabelle angegeben.

**Zement 1**

| Harz U : M : F : S | A cm | B N/mm² | B/B₀ | D N/mm² | D/D₀ |
|---|---|---|---|---|---|
| ohne Harz | 13,65 | 3,04 | | 14,12 | |
| 0,3:0,7:0,4:2,05 | 27,0 | 2,62 | 0,86 | 12,46 | 0,88 |
| 0,4:0,6:0,4:1,9 | | | nicht bestimmt | | |
| 0,5:0,5:0,4:1,75 | 25,1 | 3,11 | 1,02 | 12,46 | 0,88 |
| 0,6:0,4:0,4:1,6 | 25,2 | 3,27 | 1,08 | 13,14 | 0,93 |

**Zement 2**

| Harz<br>U : M : F : S | A<br>cm | B<br>N/mm² | $B/B_0$ | D<br>N/mm² | $D/D_0$ |
|---|---|---|---|---|---|
| ohne Harz | 13,4 | 2,03 | | 7,79 | |
| 0,3:0,7:0,4:2,05 | 23,7 | 2,17 | 1,07 | 8,61 | 1,11 |
| 0,4:0,6:0,4:1,9 | 23,9 | 2,25 | 1,11 | 8,86 | 1,14 |
| 0,5:0,5:0,4:1,75 | 23,2 | 2,21 | 1,07 | 8,66 | 1,11 |
| 0,6:0,4:0,4:1,6 | 23,0 | 3,12 | 1,54 | 10,2 | 1,31 |

**Patentansprüche**

1. Zusatzmittel für anorganische Bindemittel auf Basis eines zu einem wasserlöslichen Salz einer Sulfonsäure modifizierten Mischharzes aus Melamin, Harnstoff und Formaldehyd, gekennzeichnet durch die Modifizierung durch eine aromatische Aminosulfonsäure, wobei bei der Kondensation folgende Molverhältnisse vorliegen:
Molverhältnis von aromatischer Aminosulfonsäure zur Summe von Melamin und Harnstoff (0,2 bis 1,0) : 1,0
Molverhältnis von Melamin zu Harnstoff 0,75 : 0,25 bis 0,30 : 0,70
Molverhältnis von Summe von Melamin und Harnstoff zu Formaldehyd 1 : (1,5 bis 3,0).

2. Zusatzmittel nach Anspruch 1, dadurch gekennzeichnet, das die aromatische Aminosulfonsäure Sulfanilsäure, Metanilsäure, Naphthyl-1-amin-6-sulfonsäure oder Naphthyl-1-amin-4-sulfonsäure ist.

3. Zusatzmittel nach den Ansprüchen 1 und 2, dadurch gekennzeichnet, dass im modifizierten Melamin-Harnstoff-Mischharz das Molverhältnis von Harnstoff zu Melamin grösser als 1 ist.

4. Zusatzmittel nach den Ansprüchen 1 bis 3, dadurch gekennzeichnet, dass sie ausserdem die üblichen Additive, wie Luftporenbildner, Plastifizierer und/oder Abbindebeschleuniger enthalten.

5. Baumaterial auf Basis anorganischer Bindemittel, insbesondere Zement, mit erhöhter Fliessfähigkeit und Frühfestigkeit, dadurch gekennzeichnet, dass es ein Zusatzmittel gemäss den Ansprüchen 1 bis 4 in einer Menge von 0,1 bis 10%, bezogen auf das anorganische Bindemittel, enthält.

6. Verfahren zur Herstellung des Baumaterials gemäss Anspruch 5, dadurch gekennzeichnet, dass dem anorganischen Bindemittel, insbesondere Zement, das Zusatzmittel gemäss den Ansprüchen 1 bis 4 in einer Menge von 0,1 bis 10% zugemischt wird.

**Claims**

1. Additives for inorganic binders, based on a mixed resin of melamin, urea and formaldehyde, which has been modified to give a water-soluble salt of a sulphonic acid, characterised in that they are modified by an aromatic aminosulphonic acid, the molar ratios present during the condensation being as follows:
Molar ratio of aromatic aminosulphonic acid to the total amount of melamine and urea (0.2 to 1.0) : 1.0
Molar ratio of melamine to urea 0.75 : 0.25 to 0.30 : 0.70
Molar ratio of total amount of melamine and urea to formaldehyde 1 : (1.5 to 3.0).

2. Additives according to Claim 1, characterised in that the aromatic aminosulphonic acid is sulphanilic acid, metanilic acid, naphthyl-1-amine-6-sulphonic acid or naphthyl-1-amine-4-sulphonic acid.

3. Additives according to Claims 1 and 2, characterised in that the molar ratio of urea to melamine in the modified melamine/urea mixed resin is greater than 1.

4. Additives according to Claims 1 to 3, characterised in that they also contain the customary adjuvants, such as air-entraining agents, plasticizers and/or accelerators.

5. Building material based on inorganic binders, in particular cement, with increased flowability and early strength, characterised in that it contains an additive according to Claims 1 to 4, in an amount of 0.1 to 10%, relative to the inorganic binder.

6. Process for the manufacture of the building material according to Claim 5, characterised in that the additive according to Claims 1 to 4 is admixed, in an amount of 0.1 to 10% with the inorganic binder, in particular cement.

**Revendications**

1. Additif ou adjuvant pour liants inorganiques à base de résine mixte modifiée en un sel soluble dans l'eau d'un acide sulfonique, formée à partir de mélamine, d'urée et de formaldéhyde, caractérisé en ce que la modification a lieu au moyen d'un acide aminosulfonique aromatique, les rapports molaires suivants étant utilisés lors de la condensation:
Rapport molaire entre l'acide aminosulfonique aromatique et la somme de la mélamine et de l'urée (0,2 à 1,0) : 1,0
Rapport molaire entre la mélamine et l'urée 0,75 : 0,25 à 0,30 : 0,70
Rapport molaire entre la somme de la mélamine et de l'urée et le formaldéhyde 1 : (1,5 à 3,0).

2. Additif suivant la revendication 1, caractérisé en ce que l'acide aminosulfonique aromatique est l'acide sulfanilique, l'acide métanilique, l'acide naphtyl-1-amino-6-sulfonique ou l'acide naphtyl-1-amino-4-sulfonique.

3. Additif suivant la revendication 1 ou 2, caractérisé en ce que, dans la résine mixte mélamine-urée modifiée, le rapport molaire entre l'urée et la mélamine est supérieur à 1.

4. Additif suivant l'une quelconque des revendications 1 à 3, caractérisé en ce qu'il renferme en outre les adjuvants usuels comme des agents porophores, des plastifiants et (ou) des accélérateurs de prise.

5. Matériau de construction à base de liant inorganique, en particulier ciment, ayant une fluidité et une résistance précoce accrues, caractérisé en ce qu'il renferme un additif ou adjuvant suivant l'une quelconque des revendications 1 à 4, en une quantité allant de 0,1 à 10% sur la base du liant inorganique.

6. Procédé pour la production du matériau de construction suivant la revendication 5, caractérisé en ce qu'on mélange au liant inorganique, en particulier au ciment, l'additif suivant l'une quelconque des revendications 1 à 4, en une quantité allant de 0,1 à 10%.